# DEMANDE DE BREVET EUROPEEN

(11) **EP 0 904 680 A1**
(43) Date de publication de la demande: **31.03.1999**
(21) Numéro de dépôt: 98440189.3
(22) Date de dépôt: 28.08.1998
(51) Int. Cl.: A01B 59/041

(54) **Dispositif de Stablilisation automatique des deux bras oscillants inférieurs d'un dispositif de montage d'un outil sur un tracteur agricole ou forestier**

(30) Priorité: 28.08.1997 DE 19737318; 04.10.1997 DE 19743855
(71) Demandeur: Rau Serta Hydraulik GmbH, 73272 Neidlingen (DE); Hydrokit S.A.S., 85170 Le Poire sur Vie (FR)
(72) Inventeur: Christian EVESQUE, 73275 Ohmden (DE)
(74) Mandataire: Arbousse-Bastide, Jean-Claude Philippe

(57) **Abrégé**

Dispositif de stabilisation automatique des deux bras oscillants inférieurs (12, 13) d'un dispositif de montage d'un outil sur le châssis (1) d'un tracteur agricole ou forestier, du type comprenant deux stabilisateurs hydrauliques constitués de deux vérins hydrauliques (2, 3) à simple effet, rappelés par un ressort (29, 36).

L'un au moins desdits vérins (2, 3) est un vérin télescopique (2) ; chacun desdits vérins (2, 3) renferme un piston (22, 32) dont une partie extrême tubulaire (23, 33) abrite une tige (24, 34) librement mobile dont l'une des extrémités (25, 35) est fixée à l'un des deux bras oscillants inférieurs (12, 13) ; et le vérin télescopique (2) comporte deux étages dont le premier est constitué d'un piston principal (22) logé dans le corps (20) du vérin (2) et dans la partie extrême tubulaire (23) duquel la tige (24) peut se déplacer, le deuxième étage dudit vérin télescopique (2) étant constitué d'un piston flottant (27) logé dans le piston principal (22) et apte à venir en appui, pour la déplacer, contre l'autre extrémité (28) de ladite tige (24) ; les courses des pistons (22, 32) étant déterminées de manière que, lorsqu'ils viennent en butée sous l'effet de la pression du fluide hydraulique, les bras oscillants (12, 13) soient proches d'une position centrée de verrouillage, et la course du piston flottant (27) étant déterminée de manière qu'il puisse assurer le verrouillage sans venir en butée dans le piston principal (22).

## Description

La présente invention a pour objet un dispositif de stabilisation automatique des deux bras oscillants inférieurs d'un dispositif de montage d'un outil sur un tracteur agricole ou forestier, quelles que soient les dimensions de cet outil.

Il existe déjà des dispositifs de stabilisation latéraux des bras oscillants inférieurs, qui sont généralement de type mécanique et doivent verrouiller la position centrée desdites bras oscillants. On peut citer notamment :
- des dispositifs rigides, maintenus au moyen d'entretoises mécaniques entre l'essieu arrière du tracteur et un ou les deux bras oscillants inférieurs ;
- des dispositifs à liberté de mouvement limitée, montés à l'aide de blocs vissés sur les deux côtés du bloc de transmission du tracteur ;
- des dispositifs à verrouillage, respectivement libération automatique des bras oscillants inférieurs, par actionnement d'une chaîne depuis le siège du tracteur.

Ces systèmes mécaniques ne travaillent pas sans jeu et, de ce fait, ont une durée de vie qui est très limitée. De plus ils n'offrent plus la sécurité nécessaire, en raison de la taille croissante des outils suspendus.

D'autre part ces systèmes sont soit d'un coût de fabrication avantageux mais exigent alors de l'agriculteur un travail long et difficile pour passer de la liberté de mouvement à la stabilisation des bras oscillants, ou inversement ; soit ils sont chers à l'achat sans répondre toutefois aux attentes souhaitées, comme la stabilité, la sécurité et le confort.

On connaît également des dispositifs hydrauliques ou hydromécaniques, tels que ceux décrits dans le brevet autrichien AT 27 27 21, ou dans les documents DE 312 95 37 Al ou DE 195 37 555 Al, qui permettent une stabilisation latérale des bras oscillants inférieurs au moyen de vérins hydrauliques.

Ces systèmes hydrauliques n'ont pas pu jusqu'ici donner lieu à une exploitation commerciale en raison principalement de leur complexité et de leur coût de fabrication.

Dans le cas d'un dispositif hydromécanique comme celui décrit dans le document DE 195 37 555 Al, un réglage mécanique est indispensable à chaque accouplement d'un nouvel outil pour empêcher la mobilité latérale et réaliser un verrouillage sans jeu. Ce réglage mécanique est très difficile à effectuer, particulièrement dans les tracteurs modernes, du fait que les vérins sont peu accessibles.

Tous ces dispositifs sont réalisables en théorie, mais du fait de leur construction technique ainsi que de leurs dimensions, ils ne peuvent trouver l'espace de montage nécessaire dans tout type de tracteur, surtout dans la plupart des tracteurs de la nouvelle génération, dans lesquels la géométrie et la cinématique de l'attelage trois points sont très compactes.

Le dispositif selon l'invention permet de remédier à tous les inconvénients mentionnés ci-dessus concernant la stabilité, la sécurité, le coût de fabrication ainsi que le confort de manoeuvre pour l'utilisateur.

Dans le dispositif selon l'invention la stabilisation s'effectue de façon complètement hydraulique et assure un positionnement sans jeu des bras oscillants inférieurs en position centrée par rapport à l'axe longitudinal du tracteur.

En l'absence de pression du fluide hydraulique, le dispositif selon l'invention permet la libération maximale possible des bras oscillants, à savoir jusqu'à courte distance de chaque roue arrière du tracteur.

Le dispositif selon l'invention peut être utilisé dans tout tracteur équipé d'un attelage trois points pour le levage, le port et la traction d'outils. Ce type d'attelage est surtout utilisé en agriculture.

Le premier but de l'invention est l'obtention d'un niveau de sécurité élevé en roulage rapide avec le tracteur lorsque l'appareil suspendu est lourd, lié à une facilité de manoeuvre jusqu'ici non atteinte.

Ainsi tout nouvel outil à accoupler doit pouvoir être levé sans nécessiter des préréglages mécaniques obligeant l'utilisateur à descendre du tracteur et à effectuer une manipulation, et ce même en cas de changement entre des outils dont les dimensions en largeur sont différentes. De plus l'outil doit, par simple actionnement d'une vanne hydraulique se centrer automatiquement par rapport à l'axe longitudinal du tracteur et se stabiliser sans jeu, ou se verrouiller hydrauliquement.

Du fait de ce verrouillage sans jeu automatique, même un utilisateur non entraîné peut effectuer un changement d'outil sans risque d'affecter le roulage optimal du tracteur.

D'autre part le dispositif doit pouvoir être placé, soit automatiquement soit depuis le siège du conducteur, par pression sur un bouton, dans deux états de fonctionnement qui sont les états le plus souvent choisis par l'utilisateur d'outils agricoles :
- un état de verrouillage sans jeu des bras oscillants inférieurs, et donc de l'outil en position centrée, après leur déplacement automatique à partir d'une position latérale quelconque.
- après la détente en pression du système, selon le choix de l'utilisateur, automatiquement ou par pression d'un bouton, un état de liberté de mouvement latérale maximale des bras oscillants, et donc de l'outil, jusqu'à courte distance des roues arrière du tracteur.

Concernant l'état de verrouillage, les outils porteurs deviennent toujours plus gros, et les tracteurs roulent toujours plus vite, si bien que l'inertie des outils portés peut entraîner un risque d'accident pour l'utilisateur, même en cas de faible jeu au niveau des boulons de l'attelage.

La stabilisation automatique en position centrée constitue à cet égard la configuration optimale pour le roulage dans la circulation routière.

Pour ce qui concerne l'état de liberté de mouvement latérale, dans le fonctionnement en traction la plupart des outils agricoles oscillent librement derrière le tracteur, mais il est alors souhaitable d'avoir la liberté de mouvement latérale maximale possible, jusqu'à courte distance des roues arrière.

De plus, en labourage, cette mobilité latérale est nécessaire jusqu'à une hauteur de travail déterminée, c'est-à-dire, dans ce cas, en liaison avec le processus de levage de l'hydraulique de levage.

Une électrovanne de type 3/2 et un capteur de position de hauteur permettent d'assurer le contrôle de ce deuxième état de fonctionnement.

Par ailleurs le dispositif selon l'invention doit être constitué de produits qui, d'une part, sont formés de pièces détachées et de matériaux standardisés et/ou normalisés et, d'autre part, doivent pouvoir être fabriqués selon des processus de production simples, pour permettre à l'utilisateur de bénéficier d'un avantage de coût, ce qui a été pris en compte lors du développement du dispositif.

En outre le dispositif doit être constitué d'un nombre limité de produits simples, pour garantir à l'utilisateur une facilité d'entretien. L'invention répond également à cette exigence.

La construction des vérins hydrauliques, que l'on appellera ci-après des stabilisateurs hydrauliques, doit permettre leur montage autant que possible sur tous les types de tracteurs connus, en utilisant les points d'articulation et les perçages de fixation généralement existants, pour permettre une utilisation professionnelle non limitée. Le mode de construction compact du dispositif selon l'invention permet d'atteindre cet objectif.

Le dispositif selon l'invention se caractérise essentiellement en ce qu'il comprend deux stabilisateurs hydrauliques constitués de deux vérins hydrauliques à simple effet, rappelés chacun par un ressort et dont l'un au moins est un vérin télescopique, chacun desdits vérins comportant un piston dont une partie extrême tubulaire abrite une tige librement mobile dont l'une des extrémités est fixée à l'un des deux bras oscillants inférieurs, et le vérin télescopique comportant deux étages dont le premier est constitué d'un piston principal logé dans le corps du vérin et dans la partie extrême tubulaire duquel la tige peut se déplacer, le deuxième étage étant constitué d'un piston flottant logé dans le piston principal et apte à venir en appui, pour la déplacer, contre l'autre extrémité de la tige mobile.

Dans un premier mode de réalisation de l'invention, le dispositif comprend un seul vérin télescopique.

Dans ce cas les courses des pistons des deux vérins sont déterminées de manière que, lorsqu'ils viennent en butée, les bras oscillants soient proches d'une position centrée de verrouillage, tandis que la course du piston flottant est déterminée de manière qu'il puisse assurer le verrouillage sans venir lui-même en butée. Ainsi dans l'état de verrouillage des bras oscillants, les deux vérins sont alimentés en parallèle et sous la pression du fluide hydraulique les pistons des deux vérins viennent en butée dans les corps, puis le piston flottant du vérin télescopique se déplace dans le piston principal, sans venir en butée, et repousse la tige correspondante pour rattraper le jeu, en assurant ainsi un verrouillage sans jeu.

Ce premier mode de réalisation de l'invention convient aux tracteurs de puissance moyenne, jusqu'à 100 CV, sur lesquels les bras oscillants sont adaptés à charger uniquement des outils de catégorie 2, c'est à dire d'encombrement en largeur limité.

Dans un deuxième mode de réalisation de l'invention le dispositif comprend deux vérins télescopiques.

Dans ce cas les courses des différents pistons sont différentes, de même que le diamètre des pistons flottants, dont l'un est sensiblement supérieur à l'autre, en sorte que chacun d'eux permet de rattraper le jeu lors de courses de longueurs différentes des vérins correspondant à des outils d'encombrements en largeur différents. Ainsi, dans le cas d'une course réduite, c'est à dire pour un outil plus large, sous l'effet d'une pression de fluide hydraulique, les deux pistons principaux viennent en butée, puis le piston flottant de plus grand diamètre se déplace et repousse la tige correspondante jusqu'à la position de verrouillage en rattrapant le jeu. Dans le cas d'une course plus longue c'est à dire d'un outil moins large, après la venue en butée du piston flottant de grand diamètre, le piston flottant de petit diamètre rattrape le jeu.

Ce deuxième mode de réalisation de l'invention convient particulièrement aux tracteurs de puissance supérieure à 100 CV, capables de charger indifféremment des outils de catégorie 2 ou de catégorie 3, d'encombrement en largeur plus important.

Dans l'un ou l'autre mode de réalisation l'alimentation des deux vérins stabilisateurs s'effectue en parallèle et peut être couplée à celle du vérin de relevage dont sont généralement équipés les tracteurs agricoles. Ce couplage permet d'assurer la stabilisation en position centrée lors du relevage de l'outil.

D'autre part les pistons principaux sont préférentiellement de même diamètre et ils peuvent être soit des pistons à pression, soit des pistons plongeurs, les pistons à pression étant toutefois préférés.

Les avantages et les caractéristiques de la présente invention ressortiront plus clairement de la description qui suit et qui se rapporte au dessin annexé, lequel en représente quelques modes de réalisation non limitatifs.

Dans le dessin annexé :
- la figure 1 représente une vue partielle en plan d'un premier mode de réalisation du dispositif selon l'invention équipant un attelage.
- les figures 2a et 2b représentent des vues schématiques en coupe du même dispositif, dans un premier état de fonctionnement.
- les figures 3a et 3b représentent des vues schématiques en coupe du même dispositif, dans un deuxième état de fonctionnement.
- la figure 4 représente une vue partielle en plan d'un second mode de réalisation du dispositif selon l'invention équipant un attelage.
- les figures 5a et 5b représentent des vues schématiques en coupe du même dispositif dans un premier état de fonctionnement.
- les figures 6a et 6b représentent des vues schématiques en coupe du même dispositif dans un deuxième état de fonctionnement.
- les figures 7a et 7b représentent des vues schématiques en coupe du même dispositif dans un troisième état de fonctionnement.

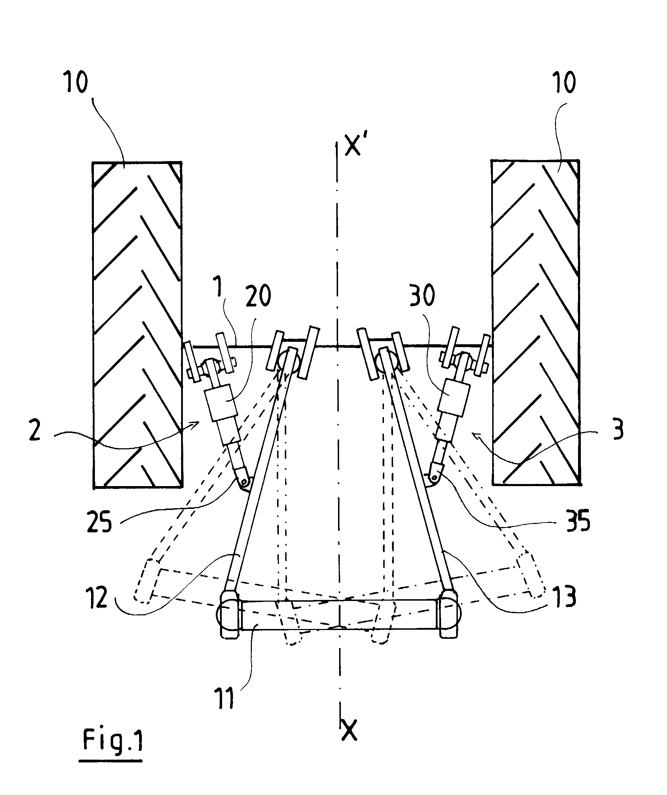

Si on se réfère à la figure 1, on peut voir une partie du châssis 1 et les deux roues arrière 10 d'un tracteur, ainsi que les deux bras oscillants inférieurs 12 et 13 d'un dispositif de montage d'un outil 11, fixés au châssis 1 par l'une de leurs extrémités.

Les bras oscillants 12 et 13 et l'outil 11 sont représentés en traits pleins dans une position centrée sur l'axe longitudinal XX' du tracteur, et en traits discontinus dans deux positions latérales extrêmes, se situant à faible distance des roues arrière 10.

Les bras oscillants 12 et 13 sont également reliés au châssis 1 au moyen de deux vérins hydrauliques, respectivement 2 et 3, qui constituent le dispositif de stabilisation selon l'invention.

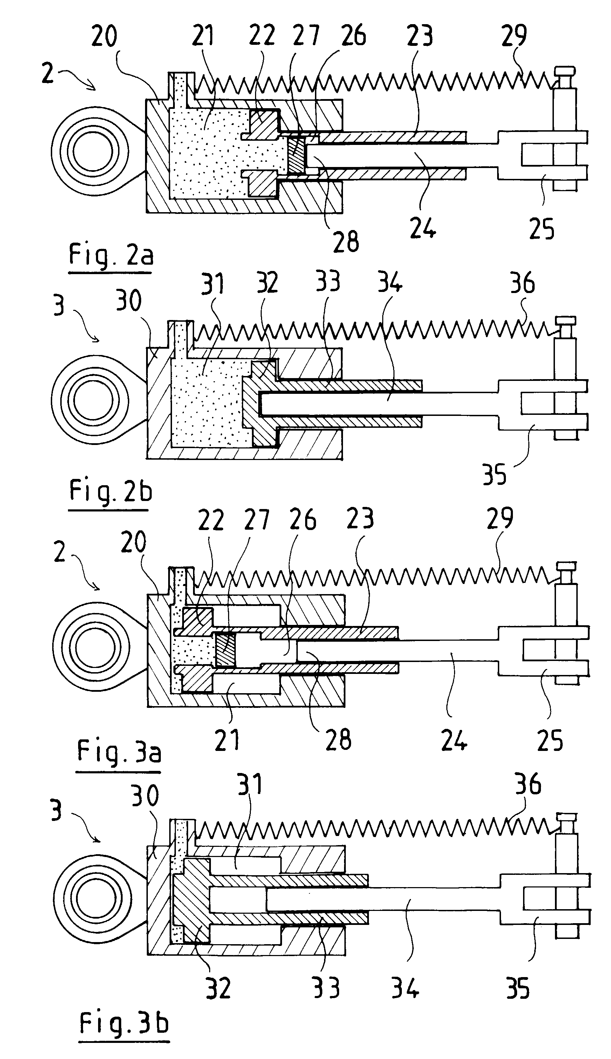

Si on se réfère à la figure 2a, on peut voir que le vérin 2 est un vérin télescopique à simple effet à deux étages. Il comprend un corps 20 solidarisable au châssis 1 et comportant une chambre principale 21 dans laquelle est logé un piston 22 dans la partie extrême extérieure tubulaire 23 duquel peut se déplacer librement dans le sens longitudinal une tige 24 dont l'extrémité extérieure 25 est solidarisable au bras oscillant 12. Le piston 22 comporte également une chambre secondaire 26 en liaison avec la chambre principale 21, et dans laquelle peut se déplacer un piston flottant 27 apte à venir en appui, pour la déplacer, contre l'extrémité intérieure 28 de la tige 24. D'autre part, le vérin 2 comporte un ressort de rappel 29 qui relie l'extrémité 25 de la tige 24 au corps 20.

Si on se réfère maintenant à la figure 2b, on peut voir que le vérin 3 comprend un corps 30 solidarisable au châssis 1 et comportant une chambre 31 dans laquelle est logé un piston 32 dans la partie extrême 33 de laquelle peut se déplacer librement une tige 34 dont l'extrémité extérieure 35 est solidarisable au bras oscillant 13. Le vérin 3 est à simple effet, et il comporte un ressort de rappel 36 qui relie le corps 30 à l'extrémité 35 de la tige 34.

Sur les figures 2a et 2b, les vérins 2 et 3 sont représentés dans l'état de verrouillage des bras oscillants 12 et 13 en position centrée. Les vérins 2 et 3 sont alimentés en parallèle, et sous la pression d'huile, les pistons 22 et 32 sortent et viennent en butée dans les corps respectivement 20 et 30, puis le piston 27 se déplace dans le piston 22 et repousse la tige 24 pour rattraper le jeu.

Les courses des pistons 22 et 32 sont déterminées de manière que, lorsqu'ils viennent en butée, les bras oscillants 12 et 13 soient proches d'une position centrée de verrouillage, et la course du piston 27 est déterminée de manière qu'il puisse assurer un verrouillage sans jeu sans venir en butée dans le piston 22.

Les figures 3a et 3b représentent les vérins respectivement 2 et 3 dans un état de fonctionnement qui correspond au libre déplacement latéral des bras oscillants 12 et 13, et donc de l'outil 11.

Dans cet état de fonctionnement, les vérins 2 et 3 ne sont pas alimentés, les pistons 22 et 32 sont donc en position rentrée dans les corps 20 et 30, ce qui permet aux tiges 24 et 34 de s'y déplacer librement, en étant uniquement maintenues et rappelées par les ressorts 29 et 36.

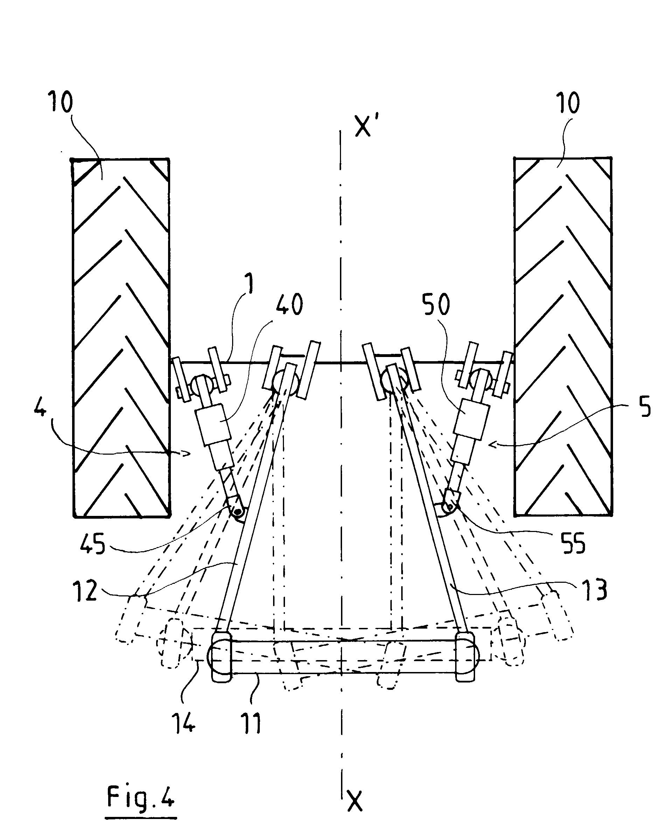

Si on se réfère maintenant à la figure 4, on peut voir un second mode de réalisation du dispositif de stabilisation selon l'invention, permettant de monter optionnellement deux outils de catégories différentes, c'est-à-dire d'encombrement et notamment de largeurs différents. On a ainsi représenté en traits pleins un outil 11, de catégorie 2, en position centrée selon l'axe XX' du tracteur, en traits discontinus un outil 14 de plus grande largeur, de catégorie 3, également en position centrée selon l'axe XX', et en traits mixtes les positions extrêmes d'oscillation de l'outil 11, lesquelles correspondent également à celles de l'outil 14.

Les bras oscillants inférieurs 12 et 13 sont aptes à porter soit un outil 11, soit un outil 14, et ils sont reliés au châssis 1 au moyen de vérins hydrauliques 4 et 5.

Les positions centrées de verrouillage dans le cas d'un outil 11 ou d'un outil 14 correspondent à des courses différentes des vérins 4 et 5, qui sont de conception différente de celle des vérins 2 et 3 du premier mode de réalisation représenté à la figure 1.

Si on se réfère à la figure 5a, on peut voir que le vérin 4 est un vérin télescopique à simple effet à deux étages. Il comprend un corps 40 solidarisable au châssis 1 et comportant une chambre principale 41 dans laquelle est logé un piston 42 dans la partie extrême extérieure 43 duquel peut se déplacer librement dans le sens longitudinal une tige 44 dont l'extrémité extérieure 45 est solidarisable au bras oscillant 12. Le piston 42 comporte également une chambre secondaire 46 en liaison avec la chambre principale 41, et dans laquelle peut se déplacer un piston flottant 47 apte à venir en appui, pour la déplacer, contre l'extrémité intérieure 48 de la tige 44. D'autre part, le vérin 4 comporte un ressort de rappel 49 qui relie l'extrémité 45 de la tige 44 au corps 40.

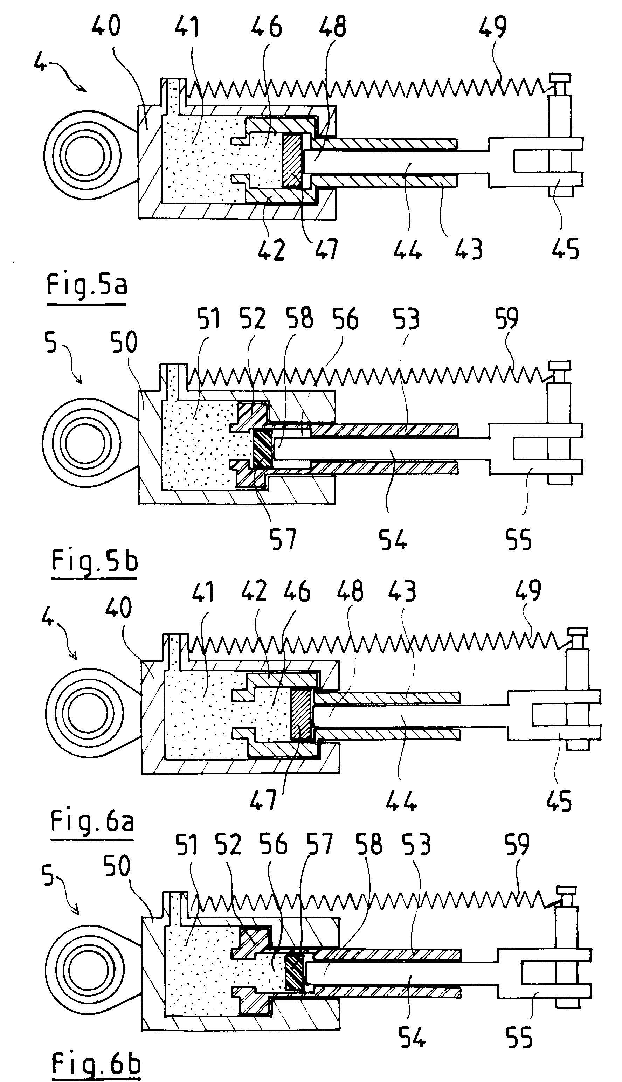

Si on se réfère maintenant à la figure 5b, on peut voir que le vérin 5 est également un vérin télescopique à simple effet à deux étages. Il comprend un corps 50 solidarisable au châssis 1 et comportant une chambre principale 51 dans laquelle est logé un piston 52 dans la partie extrême extérieure 53 duquel peut se déplacer librement dans le sens longitudinal une tige 54 dont l'extrémité extérieure 55 est solidarisable au bras oscillant 13. Le piston 52 comporte également une chambre secondaire 56 en liaison avec la chambre principale 51, et dans laquelle peut se déplacer un piston flottant 57 apte à venir en appui, pour la déplacer, contre l'extrémité intérieure 58 de la tige 54. D'autre part, le vérin 5 comporte un ressort de rappel 59 qui relie l'extrémité 55 de la tige 54 au corps 50.

Les vérins 4 et 5 sont de conception identique, par contre les courses des différents pistons sont différentes, de même que les volumes des chambres. Ainsi, le piston flottant 47 du vérin 4 est d'un diamètre supérieur à celui du piston flottant 57 du vérin 5.

Sur les figures 5a et 5b, les vérins 4 et 5 sont représentés dans l'état de verrouillage des bras oscillants 12 et 13 en position centrée, lorsque ceux-ci portent un outil 14 de catégorie 3. Les vérins 4 et 5 sont alimentés en parallèle, et sous la pression d'huile les pistons 42 et 52 viennent en butée, puis le piston flottant 47 se déplace dans la chambre 46, sans toutefois venir en butée, et repousse la tige 44 jusqu'à la position de verrouillage en rattrapant le jeu, tandis que le piston flottant 57, du fait de son diamètre inférieur, ne se déplace pas.

Sur les figures 6a et 6b, les vérins 4 et 5 sont représentés dans l'état de verrouillage des bras oscillants 12 et 13 dans une position centrée, lorsque ceux-ci portent un outil 11 de catégorie 2. Les vérins 4 et 5 sont alimentés, les pistons 42 et 52 viennent en butée, le piston flottant 47 vient également en butée, en sorte que la chambre 56 est alimentée et que le piston flottant 57 pousse la tige 54, sans toutefois venir en butée, verrouillant ainsi les bras oscillants en rattrapant le jeu.

On comprendra que, comme pour le premier mode de réalisation, les courses des pistons 42, 52, 47 et 57 sont déterminées en fonction des différentes positions de verrouillage.

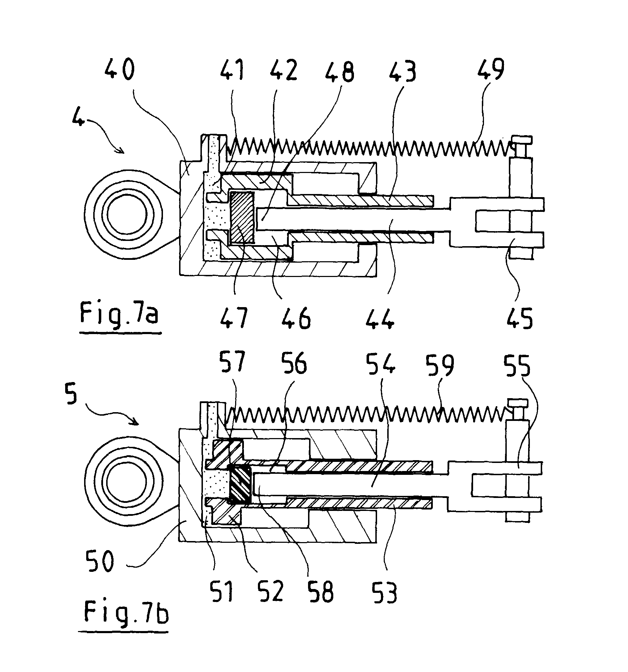

Les figures 7a et 7b représentent les vérins respectivement 4 et 5 dans un état de fonctionnement qui correspond au libre déplacement latéral des bras oscillants 12 et 13, et donc de l'outil 11 ou 14, non représentés.

Dans cet état de fonctionnement les vérins 4 et 5 ne sont pas alimentés, et les tiges 44 et 54 peuvent osciller librement.

On notera que, quel que soit le mode de réalisation, les pistons principaux, référencés 22, 32, 42, 52, peuvent être soit des piston à pression, tels que ceux représentés dans les figures, soit des pistons plongeurs, l'utilisation de pistons à pression étant toutefois préférable.

## Revendications

1. Dispositif de stabilisation automatique des deux bras oscillants inférieurs (12, 13) d'un dispositif de montage d'un outil sur le châssis (1) d'un tracteur agricole ou forestier, du type comprenant deux stabilisateurs hydrauliques constitués de deux vérins hydrauliques (2, 3) à simple effet, rappelés par un ressort (29, 36), caractérisé en ce que l'un au moins desdits vérins (2, 3) est un vérin télescopique (2) ; en ce que chacun desdits vérins (2, 3) renferme un piston (22, 32) dont une partie extrême tubulaire (23, 33) abrite une tige (24, 34) librement mobile dont l'une des extrémités (25, 35) est fixée à l'un des deux bras oscillants inférieurs (12, 13) ; et en ce que le vérin télescopique (2) comporte deux étages dont le premier est constitué d'un piston principal (22) logé dans le corps (20) du vérin (2) et dans la partie extrême tubulaire (23) duquel la tige (24) peut se déplacer, le deuxième étage dudit vérin télescopique (2) étant constitué d'un piston flottant (27) logé dans le piston principal (22) et apte à venir en appui, pour la déplacer, contre l'autre extrémité (28) de ladite tige (24) ; les courses des pistons (22, 32) étant déterminées de manière que, lorsqu'ils viennent en butée sous l'effet de la pression du fluide hydraulique, les bras oscillants (12, 13) soient proches d'une position centrée de verrouillage, et la course du piston flottant (27) étant déterminée de manière qu'il puisse assurer le verrouillage sans venir en butée dans le piston principal (22).

2. Dispositif de stabilisation automatique des deux bras oscillants inférieurs (12, 13) d'un dispositif de montage d'un outil sur le châssis (1) d'un tracteur agricole ou forestier, caractérisé en ce qu'il comprend deux stabilisateurs hydrauliques constitués de deux vérins hydrauliques télescopiques (4, 5) à simple effet rappelés par un ressort (49, 59) et dont le corps (40, 50) renferme un piston principal (42, 52) dont une partie extrême tubulaire (43, 53) abrite une tige (44, 54) librement mobile dont l'une des extrémités (45, 55) est fixée à l'un des deux bras oscillants inférieurs (12, 13) ; en ce que chaque vérin télescopique (4, 5) comporte deux étages dont le premier est constitué du piston principal (42, 52), le deuxième étage étant constitué d'un piston flottant (47, 57) logé dans ledit piston principal (42, 52) et apte à venir en appui, pour la déplacer, contre l'autre extrémité (48, 58) de la tige (44, 54) ; et en ce que les courses des pistons principaux (42, 52) et flottants (47, 57) diffèrent et les diamètres des pistons flottants (47, 57) des deux vérins (4, 5) sont différents, en sorte que chacun d'eux permet de rattraper le jeu lors de courses de longueurs différentes des vérins (4, 5).

3. Dispositif selon la revendication 1 ou la revendication 2, caractérisé en ce que les pistons principaux (22, 32, 42, 52) sont des pistons à pression.

4. Dispositif selon la revendication 1 ou la revendication 2, caractérisé en ce que les vérins (2,3 ; 4,5) sont alimentés en parallèle par le fluide hydraulique.

5. Dispositif selon la revendication 4, caractérisé en ce que l'alimentation des vérins (2, 3, 4, 5) est couplée à celle du vérin de relevage du tracteur.
